# FASCICULE DE BREVET EUROPEEN

(11) **EP 2 300 220 B1**
(45) Date de publication et mention de la délivrance du brevet: **07.11.2012**
(21) Numéro de dépôt: 09761880.5
(22) Date de dépôt: 08.06.2009
(51) Int. Cl.: B29C 70/70, B60C 15/028, B60C 17/04, B60C 17/06

(54) **DISPOSITIF DE ROULAGE A PLAT POUR VEHICULE AUTOMOBILE, ENSEMBLE MONTE L'INCORPORANT ET SON PROCEDE DE FABRICATION ET D'ASSEMBLAGE**
RUN-FLAT-VORRICHTUNG FÜR EIN KRAFTFAHRZEUG, DIESE ENTHALTENDE MONTIERTE ANORDNUNG UND HERSTELLUNGS- UND MONTAGEVERFAHREN DAFÜR
RUN-FLAT DEVICE FOR A MOTOR VEHICLE, MOUNTED ASSEMBLY INCORPORATING SAME, AND MANUFACTURING AND ASSEMBLY METHOD FOR SAME

(30) Priorité: 13.06.2008 FR 0803320
(43) Date de publication de la demande: 30.03.2011
(73) Titulaire: Hutchinson, 75008 Paris (FR)
(72) Inventeur: MARSALY, Olivier, 95290 L'Isle Adam (FR); PELLETIER, Bruno, 95340 Persan (FR); MATHIEU, Sebastien, 60530 Crouy en Thelle (FR); AUVRAY, Stephane, 60260 Lamorlaye (FR)
(74) Mandataire: Bolinches, Michel Jean-Marie
(86) Numéro de dépôt international: PCT/FR2009/000669
(87) Numéro de publication internationale: WO 2009/150329

(56) Documents cités:
- EP-A- 0 834 407
- FR-A- 2 005 856

## Description

La présente invention concerne un dispositif de roulage à plat destiné à équiper un ensemble monté sans chambre à air pour véhicule automobile, un tel ensemble monté incorporant ce dispositif qui permette de parcourir une distance importante à vitesse relativement élevée lorsque l'ensemble monté est partiellement ou totalement dégonflé, et un procédé de fabrication et d'assemblage de cet ensemble monté. Ce dispositif de roulage à plat est destiné à être monté sur une jante à plusieurs blocs, et l'ensemble monté l'incorporant est notamment utilisable pour équiper un véhicule militaire destiné à évoluer sur tous types de sols incluant des sols sablonneux.

Les dispositifs de roulage à plat connus pour jantes à plusieurs blocs sont généralement constitués par une structure annulaire de soutien qui est montée autour de la jante à l'intérieur d'une enveloppe de pneumatique et qui est équipée de moyens de blocage des talons de l'enveloppe contre les rebords de jante, tels que des cales annulaires reliant l'anneau à ces talons.

Le document EP-A-1 900 551 au nom de la Demanderesse décrit un tel dispositif, dans lequel la structure de soutien est divisée en secteurs d'anneau, comportant chacun des éléments rigides de soutien superposés et séparés deux à deux entre eux par une couche élastique par exemple constituée d'un composite caoutchouc / armature de renforcement métallique en arc de cylindre pour permettre, par le cisaillement de cette couche lors d'un effort latéral appliqué à la structure, un déplacement axial relatif des secteurs.

Un but de la présente invention est de proposer un nouveau dispositif de roulage à plat pour un ensemble monté sans chambre à air pour véhicule automobile qui comporte une jante de roue à plusieurs blocs et une enveloppe de pneumatique comportant des talons montés contre des rebords de la jante, ce dispositif comprenant :
- une structure annulaire de soutien qui est destinée à être montée autour de la jante en vue de soutenir l'enveloppe suite à une chute de pression de gonflage à l'intérieur de l'ensemble monté, et qui comporte une armature de renforcement, et
- des moyens de blocage des talons contre les rebords de jante qui sont destinés à relier la structure annulaire de soutien aux talons,
dispositif qui puisse notamment être monté manuellement à l'intérieur de l'enveloppe tout en assurant de manière satisfaisante les fonctions de roulage à plat et de maintien en place des talons.

A cet effet, un dispositif selon l'invention est tel que l'armature de renforcement comporte une ceinture axiale présentant au moins une paire d'extrémités en vis-à-vis séparées par un interstice axial de connexion et connectées entre elles par des moyens de connexion amovibles pour le verrouillage de la ceinture, ladite structure de soutien étant fendue de part en part radialement au droit dudit ou de chaque interstice, de sorte à permettre un montage manuel du dispositif à l'intérieur de l'enveloppe en y insérant progressivement la structure momentanément dépourvue des moyens de connexion.

Comme cela sera explicité ci-dessous, ces moyens de connexion amovibles équipant la ceinture axiale (i.e. s'étendant globalement dans la direction de la largeur axiale de la structure de soutien) permettent de fermer à l'intérieur de l'enveloppe la structure fendue, en mettant en place et verrouillant ces moyens de connexion pour le serrage de la ceinture.

Selon une autre caractéristique de l'invention, lesdits moyens de blocage peuvent être avantageusement formés d'un seul tenant avec ladite structure de soutien, et ils comportent alors de préférence deux protubérances latérales s'étendant axialement de part et d'autre d'une zone radialement intérieure de ladite structure de soutien et sensiblement en regard de ladite ceinture.

On notera que la ceinture du dispositif de roulage à plat selon l'invention est avantageusement conçue à la fois pour conférer à la structure de soutien l'incorporant une tenue satisfaisante à la centrifugation en roulage, et également pour assurer un effet « beadlock » de blocage des talons de l'enveloppe de pneumatique contre les rebords de jante.

Selon une autre caractéristique de l'invention, lesdits moyens de connexion amovibles peuvent avantageusement comporter au moins une bride de connexion qui est fixée de manière amovible en une face radialement interne de ladite structure de soutien par des organes de verrouillage, tels que des vis, qui sont insérés dans cette bride en traversant les deux extrémités de ladite ou de chaque paire correspondante de la ceinture.

On notera que l'espace entre les deux extrémités de la ou de chaque paire est donné par la dimension que présente la bride de connexion dans la direction circonférentielle lorsqu'elle est fixée sous la ceinture, et que la ou chaque bride de connexion peut permettre l'ajustement du diamètre intérieur du dispositif de roulage à plat.

Avantageusement, ladite ou chaque bride de connexion peut présenter une saillie médiane s'étendant dans la direction axiale perpendiculairement à la face de fixation de la bride, cette saillie étant destinée à se loger dans ledit interstice et étant conçue pour minimiser le travail en flexion de la ou chaque bride correspondante (qui présente dans ce cas une forme de T).

Egalement avantageusement, chacune desdites extrémités de la ceinture peut comporter au moins une plaque de support qui est destinée à être traversée par lesdits organes de verrouillage et qui s'étend radialement en saillie par rapport au reste de la ceinture, laquelle est de préférence pourvue d'une masse d'équilibrage diamétralement opposée auxdites plaques de support pour minimiser le balourd en roulage.

On notera que cette masse d'équilibrage, qui peut être prévue sur la face radialement interne et/ou externe de la ceinture, est de préférence utilisable dans le cas d'une structure de soutien d'un seul tenant et fendue.

Selon une autre caractéristique de l'invention, ladite ou chaque bride de connexion vient de préférence s'emboîter dans une cavité qui est formée dans ladite face interne de la structure de soutien et qui est centrée sur ledit ou chaque interstice correspondant de ladite ceinture, de telle sorte que cette bride soit accessible par cette face interne en étant par exemple sensiblement de niveau avec cette dernière.

Selon une autre caractéristique de l'invention, ladite structure de soutien peut être moulée par compression ou par injection d'au moins un matériau élastomère ou thermoplastique, respectivement, au moins la face radialement externe de la structure destinée à soutenir l'enveloppe étant de préférence réalisée en un matériau élastomère.

Avantageusement, cette structure de soutien peut être obtenue via un surmoulage de ladite ceinture par un matériau élastomère ou thermoplastique de telle sorte que ce matériau entoure radialement et axialement ladite ceinture, en formant ladite ou chaque cavité par exemple au moyen d'un insert de surmoulage disposé dans le moule.

Selon un premier mode de réalisation de l'invention, la structure de soutien forme un anneau d'un seul tenant fendu de part en part en un seul emplacement de sa circonférence, lequel emplacement est situé radialement au droit dudit interstice formé entre ladite ou l'une desdites paire(s) d'extrémités en vis-à-vis de la ceinture (laquelle peut alors être aussi bien être formée d'un seul tenant que de portions en arc de cercle mises bout à bout).

Selon un second mode de réalisation de l'invention, ladite structure de soutien est formée par plusieurs secteurs d'anneau en forme d'arcs de cercle qui sont mis bout à bout dans la direction circonférentielle,
- soit radialement au droit des interstices formés entre les paires d'extrémités en vis-à-vis de ladite ceinture, laquelle est également formée par plusieurs portions en arc de cercle mises bout à bout,
- soit radialement au droit d'un interstice formé entre une paire d'extrémités en vis-à-vis de la ceinture et en au moins un autre emplacement de la circonférence de cette ceinture dépourvu dudit interstice, la ceinture
étant alors formée d'un seul tenant et assurant la continuité circonférentielle du dispositif.

Selon un exemple de réalisation de l'invention commun à ces premier et second modes, ladite ceinture est métallique. Cette ceinture peut dans ce cas comporter au moins une tôle qui est ajourée ou non et qui s'étend à partir de deux des extrémités de ladite ou de chaque paire, cette tôle étant de forme sensiblement cylindrique ou en arc de cylindre, respectivement dans le cas où la ceinture est formée d'un seul tenant ou de portions distinctes mises bout à bout. En variante, la ceinture peut comporter une pluralité de câbles métalliques axialement juxtaposés et s'étendant à partir de deux des extrémités de ladite ou de chaque paire, chacun de ces câbles étant de forme circulaire ou en arc de cercle, respectivement dans le cas où la ceinture est formée d'un seul tenant ou de portions distinctes mises bout à bout. Selon encore une autre variante, la ceinture pourrait comporter un seul et même câble métallique faisant des allers-retours entre deux des extrémités de ladite ou chaque paire et serti sur ces extrémités pour chaque portion d'aller et de retour.

Selon un autre exemple de réalisation de l'invention également commun à ces premier et second modes, la ceinture est essentiellement réalisée en un matériau textile. Dans ce cas, elle peut comporter au moins une bande ou câblé en tissu de préférence inextensible qui s'étend à partir de deux des extrémités de ladite ou de chaque paire, chaque bande ou câblé textile étant cylindrique ou en arc de cylindre, respectivement dans le cas où la ceinture est formée d'un seul tenant ou de portions mises bout à bout.

D'une manière générale, il convient de noter que le dispositif de roulage à plat selon l'invention est de préférence à base de caoutchouc enrobant ladite ceinture par le surmoulage précité.

Un ensemble monté sans chambre à air selon l'invention pour véhicule automobile, comprenant une jante de roue à plusieurs blocs, une enveloppe de pneumatique comportant des talons respectivement montés contre des rebords axialement interne et externe de la jante, et un dispositif de roulage à plat monté autour de la jante entre ces rebords, est tel que défini ci-dessus, avec lesdits moyens de blocage qui sont de préférence formés d'un seul tenant avec la structure de soutien et comportent deux protubérances latérales qui s'étendent axialement de part et d'autre d'une zone radialement inférieure de cette structure et qui bloquent les talons de l'enveloppe contre les rebords de la jante.

Un procédé de fabrication et d'assemblage selon l'invention de cet ensemble monté comprend successivement :
a) un surmoulage de ladite ceinture par au moins un matériau élastomère ou thermoplastique pour que ce matériau entoure radialement et axialement la ceinture en formant au moins une cavité dans la face radialement interne de la structure de soutien qui est centrée sur ledit ou chaque interstice,
   la structure ainsi obtenue étant fendue radialement au droit de ladite ou chaque cavité ainsi formée, pour que cette structure forme alors :
   (i) soit un anneau d'un seul tenant fendu en un seul emplacement de sa circonférence au droit de l'interstice formé entre ladite paire d'extrémités en vis-à-vis de la ceinture, laquelle est dans ce cas formée d'un seul tenant ou de portions en arc de cercle mises bout à bout,
   (ii) soit plusieurs secteurs d'anneau en arcs de cercle mis bout à bout au droit des interstices formés entre les extrémités en vis-à-vis de chaque paire de la ceinture, laquelle est formée dans ce cas par ces portions mises bout à bout et formant ces interstices,
b) un montage de préférence manuel de la structure de soutien ainsi obtenue à l'intérieur de l'enveloppe en y insérant progressivement cette structure dépourvue des moyens de connexion, soit en déformant les deux extrémités de l'anneau fendu qu'elle forme dans le cas (i), soit en insérant l'un après l'autre et bout à bout les secteurs d'anneau qu'elle forme dans le cas (ii),
c) un montage et un verrouillage des moyens de connexion dans la ou chaque cavité formée à l'étape a) pour que les extrémités de ladite ou chaque paire en regard de la ceinture soient reliées entre elles, et pour que l'anneau fendu soit fermé dans le cas (i) ou que les secteurs d'anneau soient serrés bout à bout dans le cas (ii), puis
d) un assemblage des blocs de la jante de roue sous la face radialement interne de cette structure.

On notera que le dispositif selon l'invention présente ainsi l'avantage de pouvoir être monté manuellement, ce qui n'est en général par le cas des dispositifs de roulage à plat connus à structure de soutien torique en caoutchouc.

D'autres caractéristiques, avantages et détails de la présente invention ressortiront à la lecture de la description suivante de plusieurs exemples de réalisation de l'invention donnés à titre illustratif et non limitatif, la description étant réalisée en référence aux dessins joints, parmi lesquels :
La figure 1 est une vue en demi-section axiale d'un ensemble monté incorporant un dispositif de roulage à plat selon l'invention,
La figure 2 est une vue en perspective d'un dispositif de roulage à plat selon un premier mode de réalisation de l'invention montrant, vu radialement de l'extérieur, la fente de l'anneau formé d'un seul tenant par ce dispositif,
La figure 3 est une vue en perspective sous un autre angle du dispositif de la figure 2 montrant, vu radialement de l'intérieur à l'emplacement de cette fente, une bride de connexion équipant une paire d'extrémités d'une ceinture formant armature de renforcement du dispositif,
La figure 4 est une vue en perspective de cette ceinture selon un exemple de réalisation de l'invention,
La figure 5 est une vue en perspective d'une autre ceinture selon l'invention correspondant à une variante de la figure 4,
La figure 6 est une vue en perspective d'une autre ceinture selon l'invention correspondant à une variante de la figure 5,
Les figures 7 et 8 sont des vues en perspective de deux ceintures respectivement selon deux autres variantes de l'invention,
La figure 9 est une vue éclatée et en perspective d'un détail de la figure 3, montrant le montage d'une bride de connexion et sa fixation aux deux extrémités en vis-à-vis de la ceinture via des organes de verrouillage,
La figure 10 est une vue en perspective de la bride de la figure 9 dépourvue de ces organes de verrouillage,
La figure 11 est une vue en perspective d'une bride de connexion selon une variante de la figure 10 et également dépourvue d'organes de verrouillage,
La figure 12 est une vue en perspective d'un dispositif de roulage à plat selon un second mode de réalisation de l'invention montrant, vu radialement de l'intérieur entre deux secteurs distincts de ce dispositif, l'une des deux brides de connexion équipant une paire d'extrémités en vis-à-vis de la ceinture de renforcement de ce dispositif,
La figure 13 est une vue en perspective d'une ceinture d'un dispositif de roulage à plat selon l'invention suivant une première variante de la figure 8,
La figure 14 est une vue en perspective d'une ceinture d'un dispositif de roulage à plat selon l'invention suivant une seconde variante de la figure 8,
La figure 15 est une vue de détail de la figure 14,
La figure 16 est une vue en perspective d'une bride de connexion d'une ceinture selon l'invention conformément à une variante de la figure 10, cette bride étant équipée d'organes de verrouillage, et
La figure 17 est une vue en perspective d'un dispositif de roulage à plat à ceinture d'un seul tenant mais à structure de soutien formée de secteurs d'anneau, conformément à une variante de la figure 3.

Dans la présente description, les expressions « axialement interne » et « axialement externe » se réfèrent respectivement aux côtés de la jante de roue qui sont destinés à être tournés vers l'intérieur et vers l'extérieur du véhicule automobile, suite au montage sur un véhicule d'un ensemble monté comportant cette jante.

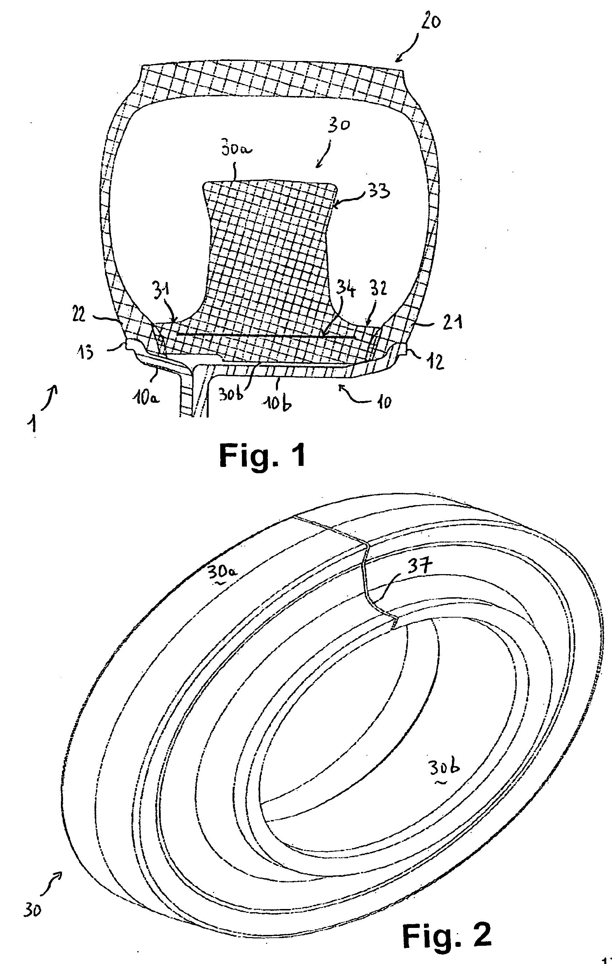

L'ensemble monté 1 selon l'invention illustré à la figure 1 comprend :
- une jante de roue 10 à deux blocs 10a et 10b qui sont solidarisés l'un avec l'autre par des moyens de fixation (non illustrés) de type boulons et qui comportent respectivement des rebords axialement interne et externe 12 et 13 délimitant deux sièges de jante s'étendant axialement à partir des rebords 12 et 13,
- une enveloppe de pneumatique 20 dont les talons 21 et 22 sont montés en appui sur ces sièges, et
- un dispositif de roulage à plat 30 monté autour d'un fond sensiblement plat de la jante 10 à l'intérieur de l'enveloppe 20 et destiné à soutenir celle-ci suite à une chute de pression de gonflage à l'intérieur de l'ensemble monté 1 tout en assurant le blocage des talons 21 et 22 contre les rebords de jante 12 et 13.

Le dispositif de roulage à plat 30 selon l'exemple de la figure 1 est constitué d'une structure annulaire de soutien de préférence en caoutchouc présentant deux protubérances latérales 31 et 32 qui s'étendent axialement de part et d'autre d'une zone radialement intérieure et de largeur maximale du dispositif 30, et qui sont adaptées pour bloquer les talons 21 et 22 contre les rebords de jante 12 et 13. Le reste du dispositif 30 présente, radialement vers l'extérieur de ces protubérances de blocage 31 et 32, une section axiale de forme sensiblement rectangulaire, excepté dans une zone radialement externe de la structure où elle s'évase dans cet exemple selon un tronçon 33 sensiblement en forme de trapèze isocèle. On notera cependant que les dispositifs selon l'invention pourraient présenter d'autres formes extérieures, pourvu qu'ils permettent d'assurer le blocage des talons 21 et 22 et le soutien de l'enveloppe 20.

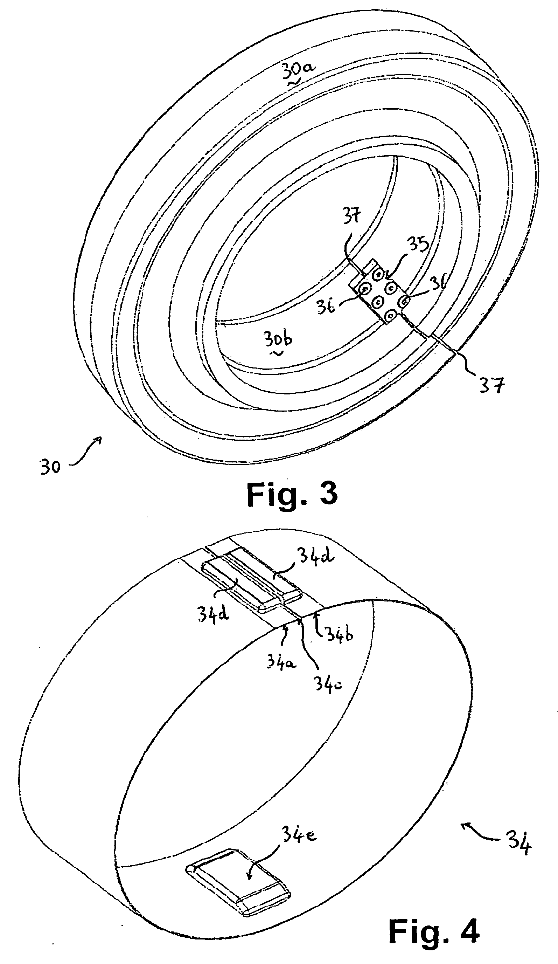

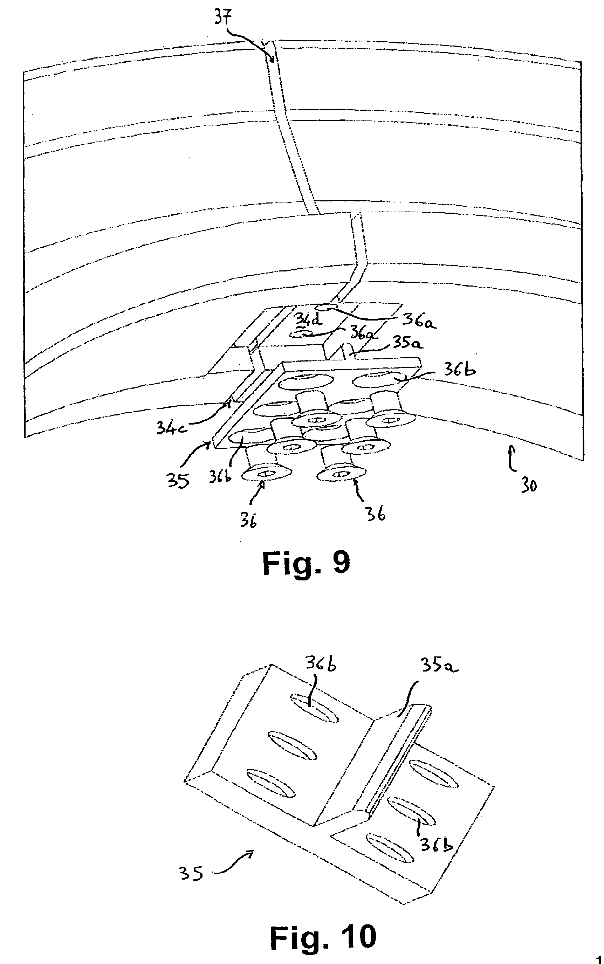

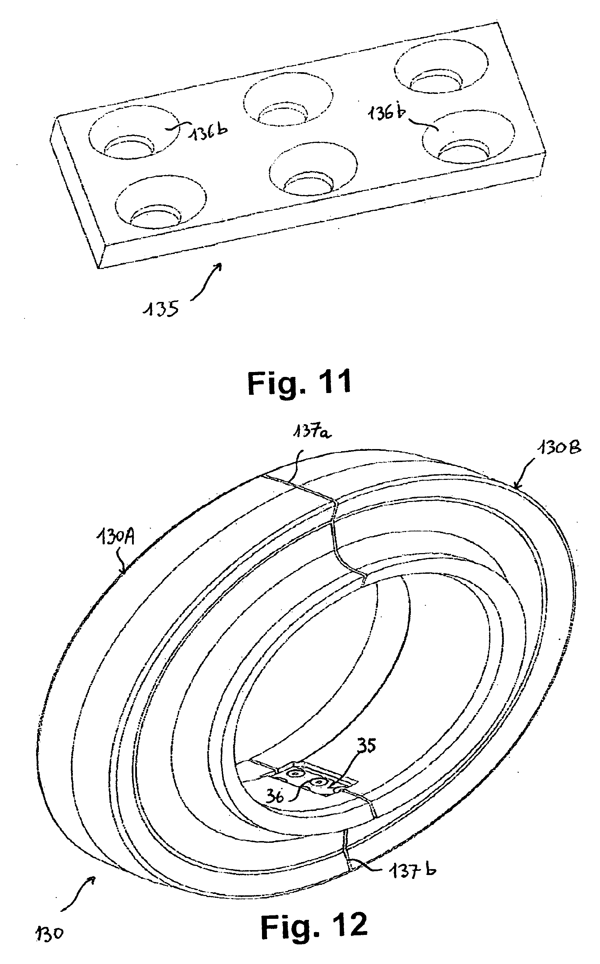

Le dispositif 30 est renforcé dans cette zone radialement intérieure par une ceinture axiale 34 à 434 (dans l'exemple de la figure 1 sensiblement centrée radialement sur les protubérances 31 et 32) qui présente une géométrie ouverte, en ce sens qu'elle est définie par au moins une paire d'extrémités 34a et 34b à 434a et 434b en vis-à-vis qui sont séparées par un interstice axial 34c à 434c de connexion (visible aux figures 4 à 8), la ou chaque paire d'extrémités 34a et 34b à 434a et 434b étant connectées entre elles par une bride de connexion 35, 135 (voir figures 10 et 11) amovible apte à verrouiller la ceinture 34 à 434 via des organes de verrouillage 36 de type vis, comme cela sera expliqué ci-dessous en référence aux figures 4 et suivantes.

De plus et comme illustré par sa fente 37 visible aux figures 2 et 3, le dispositif 30 est fendu de part en part radialement au droit du ou de chaque interstice 34c à 434c (i.e. fendu d'un côté latéral à l'autre du dispositif 30 et de la face radialement externe 30a à la face radialement interne 30b de ce dernier), de sorte à permettre un montage manuel du dispositif 30 à l'intérieur de l'enveloppe 20 en l'y insérant progressivement sans les brides 35, 135.

Dans les exemples de réalisation des figures 4 à 8, la ceinture 34 à 434 est formée d'un seul tenant, présentant de ce fait une seule paire d'extrémités 34a et 34b à 434a et 434b à connecter par la bride 35, 135. On notera toutefois qu'une ceinture selon l'invention pourrait être formée d'au moins deux portions en arcs de cercle mises bout à bout dans la direction circonférentielle et définissant ainsi au moins deux paires de telles extrémités respectivement connectées par au moins deux brides 35, 135.

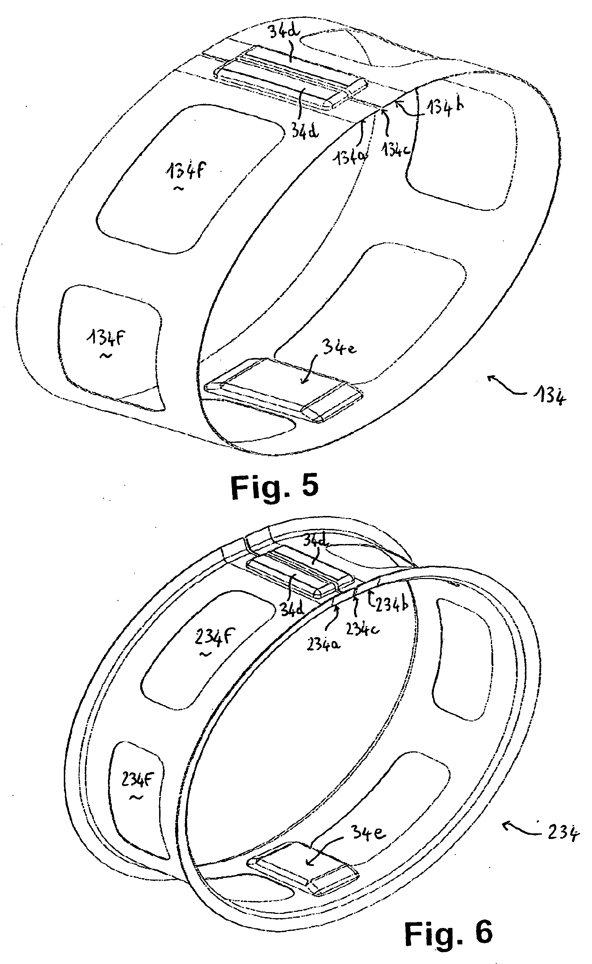

Dans les exemples des figures 4 à 6, la ceinture 34 à 234 est métallique et peut présenter alors en section axiale une géométrie plate (cas des figures 4 et 5) ou bidimensionnelle (cas de la figure 6).

Comme illustré à la figure 4, la ceinture 34 comporte dans cet exemple une tôle cylindrique pleine (i.e. non ajourée) qui s'étend à partir des deux extrémités 34a et 34b à connecter, lesquelles comportent chacune une plaque métallique de support 34d perforée qui est solidaire du reste de la ceinture 34 par exemple par soudage et qui est destinée à être traversée par les vis de verrouillage 36 de la bride 35, 135. On voit à la figure 4 que les deux plaques de support 34d s'étendent toutes deux en saillie radialement vers l'extérieur par rapport au reste de la ceinture 34 en définissant entre elles l'interstice axial 34c. En outre, la ceinture 34 peut être munie d'une masse d'équilibrage 34e diamétralement opposée aux plaques de support 34d pour minimiser le balourd en roulage, cette masse 34e étant de préférence formée en saillie sur la face radialement interne de la ceinture 34.

La ceinture 134 selon la variante de la figure 5 se différencie uniquement de celle de la figure 4, en ce qu'elle présente une structure ajourée via des lumières 134f régulièrement espacées dans la direction circonférentielle. Quant à la ceinture 234 de la figure 6, elle se distingue de la précédente seulement par ses deux rebords latéraux qui s'étendent radialement vers l'extérieur, à la manière d'une bobine, de part et d'autre des lumières 234f qui ajourent cette ceinture 234.

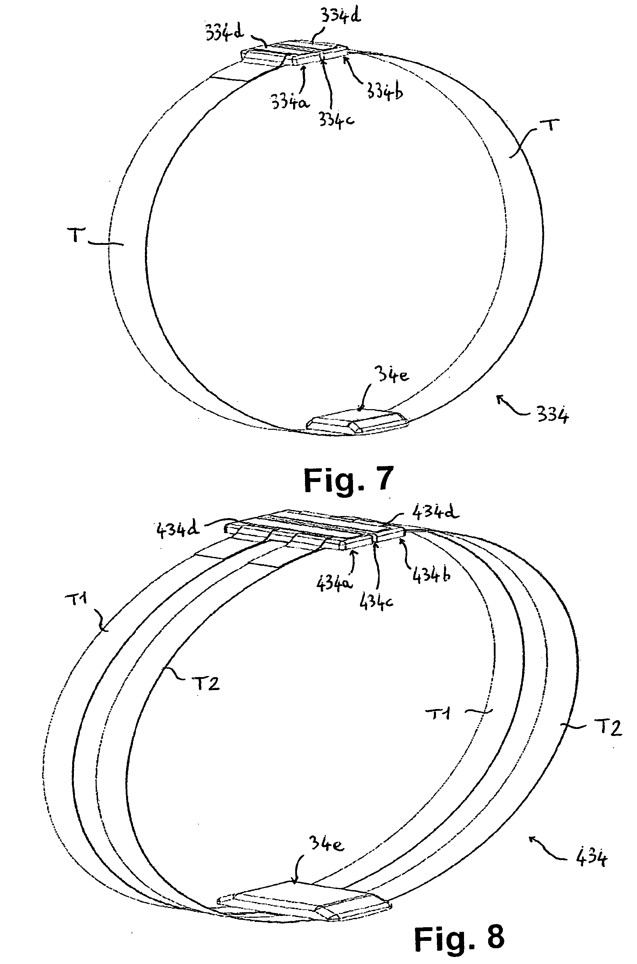

Les ceintures 334 et 434 selon les variantes des figures 7 et 8 sont toutes deux essentiellement réalisées en tissu, étant pourvues en chacune de leurs deux extrémités 334a et 334b, 434a et 434b d'une plaque métallique de support 334d, 434d perforée qui est analogue à celle des figures 4 à 6 et qui est liée au tissu par exemple par couture. Dans ce cas, elle peut comporter au moins une bande annulaire en tissu T, T1, T2 de préférence inextensible (deux bandes T1 et T2 axialement juxtaposées de manière espacée dans la variante de la figure 8) qui s'étend à partir des deux extrémités 334a et 334b, 434a et 434b.

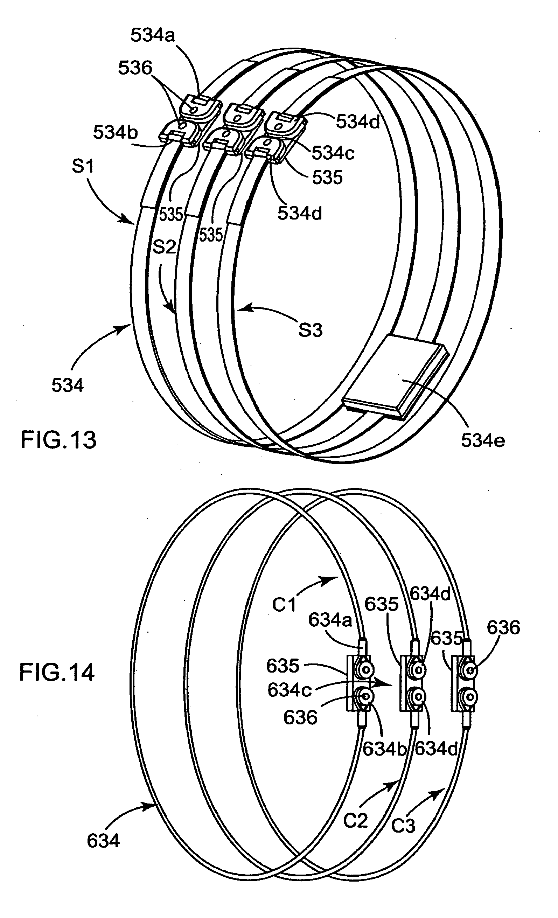

Dans la variante de réalisation illustrée à la figure 13, la ceinture 534 est constituée de n (n ≥ 2) bandes ou sangles annulaires S1, S2, S3 axialement juxtaposées qui sont fermées indépendamment les unes des autres (i.e. sans être reliées entre elles) par n brides de connexion séparées 535. Plus précisément, chaque sangle S1 à S3 a ses deux extrémités 534a et 534b qui sont respectivement montées sur deux plaques de support 534d réunies entre elles via leurs faces internes par une bride de connexion 535 traversées par des organes de verrouillage 536. On a en outre prévu une masse d'équilibrage 534e diamétralement opposée à l'interstice axial 534c de la ceinture 534 pour minimiser le balourd en roulage, cette masse 534e étant dans cet exemple formée en saillie sur la face interne de la seule sangle médiane S2.

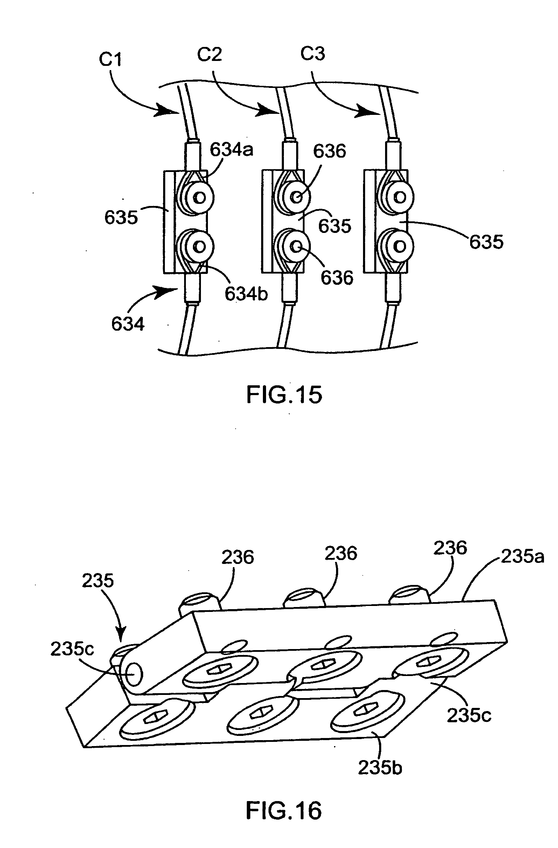

Dans la variante des figures 14 et 15, on a remplacé les sangles indépendantes S1 à S3 de la figure 13 par n câbles métalliques annulaires C1 à C3 indépendants (i.e. non reliés entre eux) et axialement juxtaposés de manière espacée, qui sont fermés par n brides de connexion séparées 635 pour former la ceinture 634 en l'interstice axial de connexion 634c de celle-ci. Chaque bride 635, qui est équipée d'organes de verrouillage 636, est montée sous deux supports 634d recevant les extrémités respectives enroulées 634a et 634b du câble correspondant C1 à C3 (lequel est par exemple en acier).

Selon une autre variante non illustrée de la ceinture selon l'invention, celle-ci peut comporter une pluralité de câbles métalliques qui sont axialement juxtaposés de manière espacée mais en étant reliés entre eux par une même bride commune de connexion en le ou chaque interstice axial et qui s'étendent à partir de deux des extrémités de la ou de chaque paire (chaque câble étant de forme circulaire ou en arc de cercle, selon que la ceinture est d'un seul tenant ou formée de portions distinctes en arc de cercle mises bout à bout), la liaison entre ces câbles et les plaques de support de la ou chaque paire d'extrémités étant par exemple obtenue par sertissage ou par des serre-câbles.

En référence aux figures 9 à 11, la ou chaque bride de connexion 35, 135 de forme rectangulaire équipant la ceinture 34 à 434 est apte à être fixée de manière amovible à travers les deux plaques de support 34d, 334d, 434d dont sont pourvues les deux extrémités en regard 34a et 34b à 434a et 434b de la ceinture et qui présentent à cet effet des orifices taraudés 36a destinés à être traversés par les vis de verrouillage 36 de la bride 35, 135 à la ceinture 34 à 434 (l'espace entre ces deux extrémités 34a et 34b à 434a et 434b correspond à la largeur de la bride 35, 135 dans la direction circonférentielle lorsqu'elle est fixée sous la ceinture 34 à 434).

Pour réaliser cette fixation, la ou chaque bride 35, 135 présente des orifices traversants 36b pour les vis 36 qui, dans l'exemple des figures 9 et 10, se divisent en deux rangées d'orifices 36b agencés respectivement de part et d'autre d'une saillie médiane 35a s'étendant dans la direction axiale perpendiculairement aux deux faces de la bride 35 traversées par ces orifices 36b. Cette saillie médiane 35a est destinée à se loger dans l'interstice 34c à 434c et permet de minimiser le travail en flexion de la bride 35 en roulage. En variante et comme illustré à la figure 11, les deux faces de la ou chaque bride 135 qui sont munies d'orifices 136b destinés à être traversés par les vis 36 peuvent toutes deux être plates.

La figure 12 présente un dispositif de roulage à plat 130 selon le second mode de réalisation de l'invention, qui se différencie du dispositif 30 selon le premier mode précité, en ce qu'il est formé par deux secteurs d'anneau 130A et 130B chacun en forme de demi-cercle qui sont mis bout à bout dans la direction circonférentielle en étant séparés entre eux par deux fentes 137a et 137b au droit des deux interstices (non visibles) formés entre chaque paire d'extrémités en vis-à-vis de la ceinture, qui est également formée par deux portions en demi-cercle mises bout à bout et serrées l'une contre l'autre par deux brides 35, 135.

Le dispositif 30, 130 de roulage à plat selon l'invention est avantageusement obtenu de la manière suivante :
a) on surmoule de préférence par du caoutchouc la ceinture 34 à 434 pour que ce caoutchouc entoure radialement et axialement celle-ci, en formant, au moyen d'un insert de surmoulage disposé dans le moule, au moins une cavité borgne dans la face radialement interne 30b de la structure de soutien qui est centrée sur le ou chaque interstice 34c à 434c (formé entre les deux extrémités 34a et 34b à 434a et 434b de la ou chaque paire d'extrémités de la ceinture),
   la structure ainsi obtenue étant fendue radialement au droit de la ou chaque cavité, pour former :
   (i) un anneau d'un seul tenant fendu en un seul emplacement 37 de sa circonférence au droit de cet interstice 34c à 434c, la ceinture 35, 135 étant dans ce cas formée d'un seul tenant ou de portions en arc de cercle mises bout à bout, ou
   (ii) plusieurs secteurs d'anneau 130A et 130B en arc de cercle séparés entre eux par les fentes 137a et 137b, mis bout à bout au droit des interstices formés entre les paires d'extrémités en vis-à-vis de la ceinture, laquelle est dans ce cas formée par ces portions mises bout à bout en formant ces interstices,
b) on monte de préférence manuellement à l'intérieur de l'enveloppe 20 ce dispositif 30, 130 ainsi fendu et dépourvu de la ou chaque bride 35, 135, soit en déformant les deux extrémités de l'anneau fendu dans le cas (i), soit en insérant l'un après l'autre et bout à bout les secteurs d'anneau 130A et 130B dans le cas (ii),
c) on fixe puis on verrouille la ou chaque bride 35, 135 dans la ou chaque cavité formée à l'étape a) pour que les extrémités 34a et 34b à 434a et 434b de la ou chaque paire en regard de la ceinture 34 à 434 soient reliées entre elles, et pour que l'anneau fendu soit fermé dans le cas (i) ou que les secteurs d'anneau 130A et 130B soient serrés bout à bout dans le cas (ii), puis
d) on assemble les deux blocs 10a et 10b de la jante 10 sous la face radialement interne 30b du dispositif 30, 130.

La bride de connexion 235 illustrée dans la variante de la figure 16 se différencie essentiellement de celle de la figure 11, en ce qu'elle est formée de deux parties 235a et 235b qui sont chacune pourvues d'organes de verrouillage 236 et qui sont articulées l'une à l'autre par des charnières 235c disposées en quinconce le long du plan longitudinal médian de la bride 235. Les charnières 235c sont situées dans la direction axiale (i.e. transversale, à l'instar de la saillie 35a de la bride 35 à la figure 9) du dispositif de roulage à plat après assemblage de celui-ci. Cette bride articulée 235 permet notamment d'absorber les contraintes de flexion auxquelles est soumis le dispositif de roulage à plat correspondant en roulage, de sorte à rendre ce dernier plus souple.

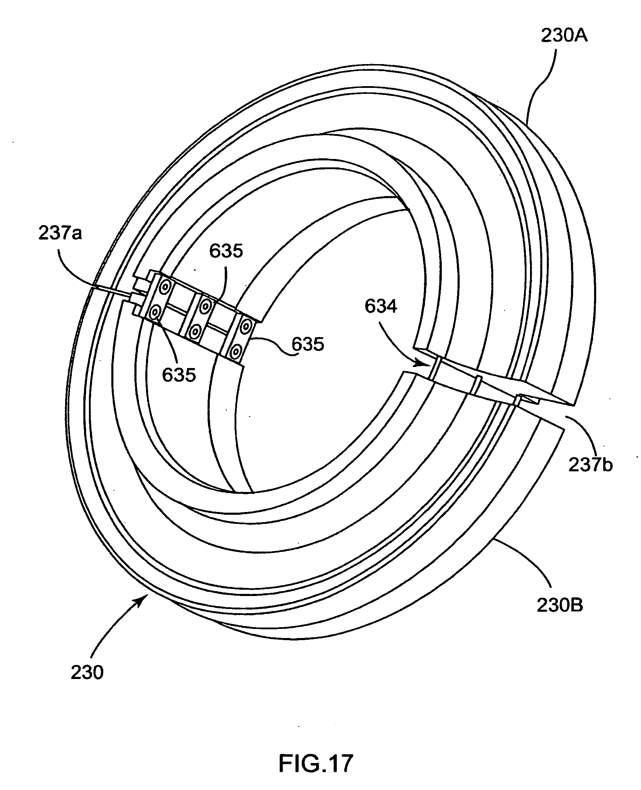

Le dispositif de roulage à plat 230 selon la variante de la figure 17 se différencie de celui de la figure 3, en ce que sa ceinture 634 (dans cet exemple à câbles C1 à C3 comme celle de la figure 14, étant précisé que toute autre structure de ceinture est utilisable dans cette variante) qui est fendue en étant formée d'un seul tenant, est ici entourée d'une structure de soutien 230 en plusieurs secteurs d'anneau 230A et 230B en arcs de cercle (au nombre de deux secteurs semi-circulaires dans cet exemple de réalisation). Dans l'exemple de la figure 17, les secteurs 230A et 230B mis bout à bout définissent une première fente axiale 237a radialement au droit de l'interstice axial 634c formé entre la paire d'extrémités en vis-à-vis 634a et 634b des câbles C1 à C3 (respectivement fermés par les brides 635), et une seconde fente axiale 237b en un autre emplacement (par exemple diamétralement opposé) de la ceinture 634. De cette manière, cette dernière assure seule la continuité circonférentielle du dispositif 230 en cette fente 237b, ce qui contribue encore à la souplesse de ce dispositif 230.

## Revendications

1. Dispositif de roulage à plat (30, 130, 230) destiné à équiper un ensemble monté (1) sans chambre à air pour véhicule automobile qui comporte une jante de roue (10) à plusieurs blocs (10a et 10b) et une enveloppe de pneumatique (20) comportant des talons (21 et 22) montés contre des rebords (12 et 13) de la jante, le dispositif comprenant :
- une structure annulaire de soutien (30, 130, 230) qui est destinée à être montée autour de la jante en vue de soutenir l'enveloppe suite à une chute de pression de gonflage à l'intérieur de l'ensemble monté, et qui comporte une armature de renforcement (34 à 634), et
- des moyens de blocage (31 et 32) des talons contre les rebords de jante qui sont destinés à relier la structure de soutien aux talons, **caractérisé en ce que** l'armature de renforcement comporte une ceinture axiale (34 à 634) présentant au moins une paire d'extrémités en vis-à-vis (34a et 34b à 634a et 634b) séparées par un interstice axial de connexion (34c à 634c) et connectées entre elles par des moyens de connexion amovibles (35, 135, 235, 535, 635, 36, 536, 636) pour le verrouillage de la ceinture, ladite structure de soutien étant fendue de part en part radialement au droit dudit ou de chaque interstice, de sorte à permettre un montage manuel du dispositif à l'intérieur de l'enveloppe en y insérant progressivement ladite structure momentanément dépourvue desdits moyens de connexion.

2. Dispositif (30, 130, 230) selon la revendication 1, **caractérisé en ce que** lesdits moyens de blocage (31 et 32) sont formés d'un seul tenant avec ladite structure de soutien (30, 130, 230) et comportent de préférence deux protubérances latérales (31 et 32) s'étendant axialement de part et d'autre d'une zone radialement intérieure de ladite structure de soutien et sensiblement en regard de ladite ceinture (34 à 634).

3. Dispositif (30, 130, 230) selon une des revendications précédentes, **caractérisé en ce que** lesdits moyens de connexion amovibles (35, 135, 235, 535, 635, 36, 536, 636) comportent au moins une bride de connexion (35, 135, 235, 535, 635) qui est fixée de manière amovible en une face radialement interne (30b) de ladite structure de soutien (30, 130, 230) par des organes de verrouillage (36, 536, 636), tels que des vis, qui sont insérés dans cette bride en traversant les deux extrémités (34a et 34b à 634a et 634b) de ladite ou de chaque paire correspondante de la ceinture (34 à 634).

4. Dispositif (30, 130) selon la revendication 3, **caractérisé en ce que** ladite ou chaque bride de connexion (35) présente une saillie médiane (35a) s'étendant dans la direction axiale perpendiculairement à la face de fixation de la bride, cette saillie étant destinée à se loger dans ledit interstice (34c à 434c) et étant conçue pour minimiser le travail en flexion de la ou chaque bride correspondante en roulage.

5. Dispositif (30, 130) selon la revendication 3 ou 4, **caractérisé en ce que** chacune desdites extrémités (34a et 34b à 634a et 634b) de la ceinture (34 à 634) comporte au moins une plaque de support (34d, 334d, 434d, 534d, 634d) qui est destinée à être traversée par lesdits organes de verrouillage (36, 536, 636) et qui s'étend radialement en saillie par rapport au reste de la ceinture, laquelle est de préférence pourvue d'une masse d'équilibrage (34e, 534e) diamétralement opposée auxdites plaques de support pour minimiser le balourd en roulage.

6. Dispositif (30, 130) selon une des revendications 3 à 5, **caractérisé en ce que** ladite ou chaque bride de connexion (35, 135, 235) vient s'emboîter dans une cavité qui est formée dans ladite face interne (30b) de la structure de soutien (30, 130) et qui est centrée sur ledit ou chaque interstice correspondant (34c à 434c) de ladite ceinture (34 à 434), de telle sorte que cette bride soit accessible par cette face interne en étant de préférence sensiblement de niveau avec cette dernière.

7. Dispositif (30, 130, 230) selon une des revendications précédentes, **caractérisé en ce que** ladite structure de soutien (30, 130, 230) est moulée par compression ou par injection d'au moins un matériau élastomère ou thermoplastique, respectivement, au moins la face radialement externe (30a) de la structure destinée à soutenir l'enveloppe (20) étant de préférence réalisée en un matériau élastomère.

8. Dispositif (30, 130, 230) selon les revendications 6 et 7, **caractérisé en ce que** ladite structure de soutien (30, 130, 230) est obtenue via un surmoulage de ladite ceinture (34 à 634) par un matériau élastomère ou thermoplastique de telle sorte que ce matériau entoure radialement et axialement ladite ceinture en formant ladite ou chaque cavité.

9. Dispositif (30) selon une des revendications précédentes, **caractérisé en ce que** ladite structure de soutien (30) forme un anneau d'un seul tenant qui est fendu de part en part en un seul emplacement (37) de sa circonférence, lequel emplacement est situé radialement au droit dudit interstice (34c à 434c) formé entre ladite ou l'une desdites paire(s) d'extrémités (34a et 34b à 434a et 434b) en vis-à-vis de la ceinture (34 à 434).

10. Dispositif (130, 230) selon une des revendications 1 à 8, **caractérisé en ce que** ladite structure de soutien (130, 230) est formée par plusieurs secteurs d'anneau (130A et 130B, 230A et 230B) en forme d'arcs de cercle qui sont mis bout à bout dans la direction circonférentielle,
- soit radialement au droit des interstices formés entre les paires d'extrémités en vis-à-vis de ladite ceinture, laquelle est également formée par plusieurs portions en arc de cercle mises bout à bout,
- soit radialement au droit d'un interstice (237a) formé entre une paire d'extrémités en vis-à-vis de la ceinture et en au moins un autre emplacement (237b) de la circonférence de cette ceinture dépourvu dudit interstice, la ceinture étant alors formée d'un seul tenant et assurant la continuité circonférentielle du dispositif.

11. Dispositif (30, 130, 230) selon une des revendications précédentes, **caractérisé en ce que** ladite ceinture (34, 134, 234, 634) est métallique et comporte de préférence :
- au moins une tôle qui est ajourée ou non et qui s'étend à partir de deux des extrémités (34a et 34b à 234a et 234b) de ladite ou de chaque paire, cette tôle étant de forme sensiblement cylindrique ou en arc de cylindre, respectivement dans le cas où la ceinture est formée d'un seul tenant ou de portions distinctes mises bout à bout, ou bien
- une pluralité de câbles métalliques (C1, C2, C3) qui sont axialement juxtaposés et qui s'étendent à partir de deux des extrémités (634a et 634b) de ladite ou de chaque paire, chacun de ces câbles étant de forme circulaire ou en arc de cercle, respectivement dans le cas où la ceinture est formée d'un seul tenant ou de portions distinctes mises bout à bout.

12. Dispositif (30, 130) selon une des revendications 1 à 10, **caractérisé en ce que** ladite ceinture (334, 434, 534) est essentiellement réalisée en un matériau textile, comportant au moins une bande ou câblé en tissu (T ou T1, T2 ou S1, S2, S3) de préférence inextensible qui s'étend à partir de deux des extrémités (334a et 334b, 434a et 434b, 534a et 534b) de ladite ou de chaque paire, chaque bande ou câblé textile étant de forme cylindrique ou en arc de cylindre, respectivement dans le cas où la ceinture est formée d'un seul tenant ou de portions distinctes mises bout à bout.

13. Ensemble monté (1) sans chambre à air pour véhicule automobile, comprenant une jante de roue (10) à plusieurs blocs (10a et 10b), une enveloppe de pneumatique (20) comportant des talons (21 et 22) respectivement montés contre des rebords axialement interne et externe (12 et 13) de la jante, et un dispositif de roulage à plat (30, 130, 230) monté autour de la jante entre ces rebords, **caractérisé en ce que** ce dispositif est tel que défini à l'une des revendications précédentes.

14. Ensemble monté (1) selon la revendication 13, **caractérisé en ce que** lesdits moyens de blocage (31 et 32) sont formés d'un seul tenant avec ladite structure de soutien (30, 130, 230) et comportent de préférence deux protubérances latérales (31 et 32) qui s'étendent axialement de part et d'autre d'une zone radialement inférieure de ladite structure de soutien et qui bloquent les talons (21 et 22) de l'enveloppe (20) contre les rebords (12 et 13) de la jante (10).

15. Procédé de fabrication et d'assemblage d'un ensemble monté (1) selon la revendication 13 ou 14, **caractérisé en ce qu'**il comprend successivement :
a) un surmoulage de ladite ceinture (34 à 634) par au moins un matériau élastomère ou thermoplastique pour que ce matériau entoure radialement et axialement la ceinture en formant au moins une cavité dans la face radialement interne de la structure de soutien qui est centrée sur ledit ou chaque interstice,
la structure ainsi obtenue étant fendue radialement au droit de ladite ou chaque cavité ainsi formée pour que cette structure forme alors :
(i) soit un anneau d'un seul tenant fendu en un seul emplacement (37) de sa circonférence au droit de l'interstice formé entre ladite paire d'extrémités en vis-à-vis de la ceinture, laquelle est dans ce cas formée d'un seul tenant ou de portions en arc de cercle mises bout à bout,
(ii) soit plusieurs secteurs d'anneau (130A et 130B) en arcs de cercle mis bout à bout au droit des interstices formés entre les extrémités en vis-à-vis de chaque paire de la ceinture, laquelle est dans ce cas formée par ces portions mises bout à bout et formant ces interstices,
b) un montage de préférence manuel de la structure de soutien (30, 130, 230) ainsi obtenue à l'intérieur de l'enveloppe (20) en y insérant progressivement cette structure dépourvue des moyens de connexion (35, 135, 235, 535, 635 et 36, 536, 636), soit en déformant les deux extrémités de l'anneau fendu qu'elle forme dans le cas (i), soit en insérant l'un après l'autre et bout à bout les secteurs d'anneau qu'elle forme dans le cas (ii),
c) un montage et un verrouillage des moyens de connexion dans la ou chaque cavité formée à l'étape a) pour que les extrémités de ladite ou chaque paire en regard de la ceinture soient reliées entre elles, et pour que l'anneau fendu soit fermé dans le cas (i) ou que les secteurs d'anneau soient serrés bout à bout dans le cas (ii), puis
d) un assemblage des blocs (10a et 10b) de la jante de roue (10) sous la face radialement interne (30b) de cette structure.

## Claims

1. A run-flat device (30, 130, 230) intended to be fitted to a tubeless mounted assembly (1) for a motor vehicle, which comprises a wheel rim (10) in several blocks (10a and 10b) and a tire cover (20) comprising beads (21 and 22) mounted against flanges (12 and 13) of the rim, the device comprising:
- an annular supporting structure (30, 130, 230) which is intended to be mounted around the rim so as to support the cover following a drop in inflating pressure inside the mounted assembly, and which comprises a reinforcement (34 to 634), and
- locking means (31 and 32) for locking the beads against the rim flanges and which are intended to connect the supporting structure to the beads, **characterized in that** the reinforcement comprises an axial belt (34 to 634) having at least one pair of opposing ends (34a and 34b to 634a and 634b) separated by an axial connecting gap (34c to 634c) and connected together by removable connecting means (35, 135, 235, 535, 635, 36, 536, 636) for fastening the belt, said supporting structure being split right through radially in line with said or each gap so as to allow the device to be mounted manually inside the cover by gradually inserting into said cover said structure which is temporarily devoid of said connecting means.

2. The device (30, 130, 230) as claimed in claim 1, **characterized in that** said locking means (31 and 32) are formed as a single piece with said supporting structure (30, 130, 230) and preferably comprise two lateral protrusions (31 and 32) extending axially one on each side of a radially interior zone of said supporting structure (30, 130, 230) and substantially facing said belt (34 to 634).

3. The device (30, 130, 230) as claimed in one of the preceding claims, **characterized in that** said removable connecting means (35, 135, 235, 535, 635, 36, 536, 636) comprise at least one connecting flange (35, 135, 235, 535, 635) which is fixed removably on a radially internal face (30b) of said supporting structure (30, 130, 230) by fasteners (36, 536, 636), such as screws, which are inserted into this flange passing through the two ends (34a and 34b to 634a and 634b) of said or each corresponding pair of the belt (34 to 634).

4. The device (30, 130) as claimed in claim 3, **characterized in that** said or each connecting flange (35) has a central projection (35a) extending in the axial direction at right angles to the fixing face of the flange, this projection being intended to sit in said gap (34c to 434c) and being designed to minimize the bending work of the or each corresponding flange under running conditions.

5. The device (30, 130) as claimed in claim 3 or 4, **characterized in that** each of said ends (34a and 34b to 634a and 634b) of the belt (34 to 634) comprises at least one support plate (34d, 334d, 434d, 534d, 634d) through which said fasteners (36, 536, 636) are intended to pass and which extends radially projecting in relation to the remainder of the belt, which is preferably provided with a balancing weight (34e, 534e) diametrically opposite said support plates in order to minimize the out-of-balance under running conditions.

6. The device (30, 130) as claimed in one of claims 3 to 5, **characterized in that** said or each connecting flange (35, 135, 235) fits into a cavity which is formed in said internal face (30b) of the supporting structure (30, 130) and which is centered on said or each corresponding gap (34c to 434c) of said belt (34 to 434) so that this flange is accessible via this internal face while preferably being substantially level therewith.

7. The device (30, 130, 230) as claimed in one of the preceding claims, **characterized in that** said supporting structure (30, 130, 230) is compression-molded or injection-molded in at least one elastomeric or thermoplastic material, respectively, at least the radially external face (30a) of the structure intended to support the cover (20) preferably being made of an elastomeric material.

8. The device (30, 130, 230) as claimed in claims 6 and 7, **characterized in that** said supporting structure (30, 130, 230) is obtained by overmolding said belt (34 to 634) with an elastomeric or thermoplastic material so that this material radially and axially surrounds said belt, forming said or each cavity.

9. The device (30) as claimed in one of the preceding claims, **characterized in that** said supporting structure (30) forms a one-piece ring which is split right through in a single location (37) on its circumference, which location is situated radially in line with said gap (34c to 434c) formed between said or one of said pair(s) of opposing ends (34a and 34b to 434a and 434b) of the belt (34 to 434).

10. The device (130, 230) as claimed in one of claims 1 to 8, **characterized in that** said supporting structure (130, 230) is formed of several ring sectors (130A and 130B, 230A and 230B) shaped as circular arcs, which are butted together in the circumferential direction,
- either radially in line with the gaps (137a and 137b) formed between the pairs of opposing ends of said belt, which is also formed of several circular-arc portions (130A and 130B) butted together,
- or radially in line with a gap (237a) formed between a pair of opposing ends of the belt and in at least one other location (237b) on the circumference of this belt that has no said gap, the belt then being formed as a single piece and providing the device with circumferential continuity.

11. The device (30, 130, 230) as claimed in one of the preceding claims, **characterized in that** said belt (34, 134, 234, 634) is made of metal and preferably comprises:
- at least one metal sheet which may or may not be holed and which extends from two of the ends (34a and 34b to 234a and 234b) of said or each pair, this metal sheet being substantially cylindrical or shaped as an arc of a cylinder, when the belt is formed as a single piece, or when it is formed as separate portions butted together, respectively, or else
- a plurality of metal cords (C1, C2, C3) which are axially juxtaposed and which extend from two of the ends (634a and 634b) of said or each pair, each of these cords being circular or shaped as an arc of a circle, when the belt is formed as a single piece, or when it is formed of separate portions butted together, respectively.

12. The device (30, 130) as claimed in one of claims 1 to 10, **characterized in that** said belt (334, 434, 534) is essentially made of a textile material, comprising at least one fabric strip or cord (T or T1, T2 or S1, S2, S3), preferably inextensible, which extends from two of the ends (334a and 334b, 434a and 434b, 534a and 534b) of said or each pair, each textile strip or cord being cylindrical or shaped as an arc of a cylinder, when the belt is formed as a single piece, or when it is formed of separate portions butted together, respectively.

13. A tubeless mounted assembly (1) for a motor vehicle, comprising a wheel rim (10) in several blocks (10a and 10b), a tire cover (20) comprising beads (21 and 22) mounted respectively against axially internal and external flanges (12 and 13) of the rim, and a run-flat device (30, 130, 230) mounted around the rim between these flanges, **characterized in that** this device is as defined in one of the preceding claims.

14. The mounted assembly (1) as claimed in claim 13, **characterized in that** said locking means (31 and 32) are formed as a single piece with said supporting structure (30, 130, 230) and preferably comprise two lateral protrusions (31 and 32) which extend axially one on each side of a radially lower zone of said supporting structure and which lock the beads (21 and 22) of the cover (20) against the flanges (12 and 13) of the rim (10).

15. A method of manufacturing and assembling a mounted assembly (1) as claimed in claim 13 or 14, **characterized in that** it comprises, in succession:
a) overmolding said belt (34 to 634) with at least one elastomeric or thermoplastic material so that this material radially and axially surrounds the belt, forming at least one cavity in the radially internal face of the supporting structure which is centered on said or each gap,
the structure thus obtained being split radially in line with said or each cavity thus formed so that this structure then forms:
(i) either a single-piece ring split in a single location (37) on its circumference, in line with the gap formed between said pair of opposing ends of the belt, which is, in this case, formed as a single piece or from circular-arc portions butted together,
(ii) or several circular-arc ring sectors (130A and 130B) butted together in line with the gaps formed between the opposing ends of each pair of the belt, which is in this case formed by these portions butted together and forming these gaps,
b) mounting the supporting structure (30, 130, 230) thus obtained inside the cover (20), preferably by hand, by gradually inserting into the cover this structure devoid of the connecting means (35, 135, 235, 535, 635 and 36, 536, 636), either by deforming the two ends of the split ring that it forms in case (i) or by inserting the ring sectors that it forms in case (ii) one after the other and end to end,
c) fitting and fastening the connecting means in the or each cavity formed in step a) so that the ends of said or each facing pair of the belt are joined together and so that the split ring is closed up in case (i) or so that the ring sectors are tightly packed end to end in case (ii), then
d) assembling the blocks (10a and 10b) of the wheel rim (10) under the radially internal face (30b) of this structure.

## Patentansprüche

1. Notlaufvorrichtung (30, 130, 230), die dazu bestimmt ist, eine schlauchlose montierte Baugruppe (1) für ein Kraftfahrzeug auszurüsten, die eine aus mehreren Blöcken (10a und 1 0b) bestehende Radfelge (10) und einen Mantel (20) eines Luftreifens mit gegen Felgenhörner (12 und 13) der Felge montierten Mantelwülsten (21 und 22) aufweist, wobei die Vorrichtung folgendes aufweist:
- eine ringförmige Stützstruktur (30, 130, 230), die dazu bestimmt ist, um die Felge montiert zu werden, um den Mantel nach einem Aufblasdruckabfall im Inneren der montierten Baugruppe abzustützen, und die eine Versteifungsarmierung (34 bis 634) aufweist, und
- Festklemmeinrichtungen (31 und 32) zum Festklemmen der Mantelwülste gegen die Felgenhörner, die dazu bestimmt sind, die Stützstruktur mit den Mantelwülsten zu verbinden,
**dadurch gekennzeichnet, dass** die Versteifungsarmierung einen axialen Reif (34 bis 634) aufweist, der wenigstens ein Paar von einander gegenüberliegenden Enden (34a und 34b bis 634a und 634b) aufweist, die voneinander durch einen axialen Verbindungsspalt (34c bis 634c) getrennt und durch abnehmbare Verbindungseinrichtungen (35, 135, 235, 535, 635, 36, 536, 636) zum Verriegeln des Reifs miteinander verbunden sind, wobei die Stützstruktur entlang des bzw. jedes Spaltes durchgehend radial durchtrennt ist, so dass sie ein manuelles Montieren der Vorrichtung im Inneren des Mantels zulässt, indem die vorerst nicht mit den Verbindungseinrichtungen versehene Struktur fortschreitend darin eingesetzt wird.

2. Vorrichtung (30, 130, 230) nach Anspruch 1, **dadurch gekennzeichnet, dass** die Festklemmeinrichtungen (31 und 32) einstückig mit der Stützstruktur (30, 130, 230) ausgebildet sind und bevorzugt zwei seitliche Fortsätze (31 und 32) aufweisen, die sich beidseitig von einer radial inneren Zone der Stützstruktur (30, 130, 230) und im Wesentlichen dem Reif (34 bis 634) gegenüberliegend axial erstrecken.

3. Vorrichtung (30, 130, 230) nach einem der vorhergehenden Ansprüche, **dadurch gekennzeichnet, dass** die abnehmbaren Verbindungseinrichtungen (35, 135, 235, 535, 635, 36, 536, 636) mindestens einen Verbindungsbügel (35, 135, 235, 535, 635) aufweisen, der auf abnehmbare Weise auf einer radialen Innenseite (30b) der Stützstruktur (30, 130, 230) durch Vernegelungsorgane (36, 536, 636) wie etwa Schrauben befestigt ist, die derart in diesen Bügel eingesetzt sind, dass sie die zwei Enden (34a und 34b bis 634a und 634b) des bzw. jedes entsprechenden Paares des Reifs (34 bis 634) durchsetzen.

4. Vorrichtung (30, 130) nach Anspruch 3, **dadurch gekennzeichnet, dass** der bzw. jeder Verbindungsbügel (35) einen mittigen Steg (35a) aufweist, der sich in der Axialrichtung senkrecht zur Befestigungsfläche des Bügels erstreckt, wobei dieser Steg dazu bestimmt ist, sich in den Spalt (34c bis 434c) einzufügen, und so ausgelegt ist, dass er die Biegebeanspruchung des bzw. jedes entsprechenden Bügels beim Rollen minimiert.

5. Vorrichtung (30, 130) nach Anspruch 3 oder 4, **dadurch gekennzeichnet, dass** jedes der Enden (34a und 34b bis 634a und 634b) des Reifs (34 bis 634) mindestens eine Stützplatte (34d, 334d, 434d, 534d, 634d) aufweist, die dazu bestimmt ist, von den Verriegelungsorganen (36, 536, 636) durchsetzt zu werden, und die sich bezogen auf den übrigen Reif radial erhaben erstreckt, wobei der letztere bevorzugt mit einer zu den Stützplatten diametral entgegengesetzten Ausgleichmasse (34e, 534e) zum Minimieren der Unwucht beim Rollen versehen ist.

6. Vorrichtung (30, 130) nach einem der Ansprüche 3 bis 5, **dadurch gekennzeichnet, dass** der bzw. jeder Verbindungsbügel (35, 135, 235) in einem Hohlraum zu liegen kommt, der in der Innenseite (30b) der Stützstruktur (30, 130) ausgebildet ist und an dem bzw. jedem entsprechenden Spalt (34c bis 434c) des Reifs (34 bis 434) so zentriert ist, dass der Bügel von dieser Innenseite her zugänglich ist, indem er vorzugsweise mit dieser im Wesentlichen auf gleicher Höhe liegt.

7. Vorrichtung (30, 130, 230) nach einem der vorhergehenden Ansprüche, **dadurch gekennzeichnet, dass** die Stützstruktur (30, 130, 230) durch Pressen oder Spritzgießen mindestens eines elastomeren bzw. thermoplastischen Materials geformt ist, wobei zumindest die radiale Außenseite (30a) der zum Abstützen des Mantels (20) bestimmten Struktur bevorzugt aus einem elastomeren Material ausgeführt ist.

8. Vorrichtung (30, 130, 230) nach den Ansprüchen 6 und 7, **dadurch gekennzeichnet, dass** die Stützstruktur (30, 130, 230) durch Umspritzen des Reifs (34 bis 634) mit einem elastomeren oder thermoplastischen Material erhalten wird, so dass dieses Material den Reif radial und axial umgibt und dabei den bzw. jeden Hohlraum ausbildet.

9. Vorrichtung (30) nach einem der vorhergehenden Ansprüche, **dadurch gekennzeichnet, dass** die Stützstruktur (30) einen einstückigen Ring darstellt, der an einer einzelnen Stelle (37) seines Umfangs durchgehend durchtrennt ist, wobei sich diese Stelle radial entlang des Spaltes (34c bis 434c) befindet, der zwischen dem Paar bzw. einem der Paare von Enden (34a und 34b bis 434a und 434b) dem Reif (34 bis 434) gegenüberliegend ausgebildet ist.

10. Vorrichtung (130, 230) nach einem der Ansprüche 1 bis 8, **dadurch gekennzeichnet, dass** die Stützstruktur (130, 230) aus mehreren kreisbogenförmigen Ringsektoren (130A und 130B, 230A und 230B) gebildet ist, die in der Umfangsrichtung gegeneinander anliegend angeordnet sind, und zwar
- entweder radial entlang der zwischen den Paaren von Enden gegenüber von dem Reif ausgebildeten Spalte (137a und 137b), wobei der Reif ebenfalls aus mehreren, gegeneinander anliegenden Kreisbogenabschnitten (130A und 130B) ausgebildet ist,
- oder radial entlang eines zwischen einem Paar von Enden gegenüber von dem Reif ausgebildeten Spaltes (237a) und an zumindest einer anderen Stelle (237b) des Umfangs des Reifs, die nicht mit dem Spalt versehen ist, wobei der Reif dann einstückig ausgebildet ist und die umfangsmäßige Kontinuität der Vorrichtung gewährleistet.

11. Vorrichtung (30, 130, 230) nach einem der vorhergehenden Ansprüche, **dadurch gekennzeichnet, dass** der Reif (34, 134, 234, 634) metallisch ist und bevorzugt folgendes aufweist:
- mindestens ein Blechteil, das durchbrochen oder nicht durchbrochen ist und sich von zwei der Enden (34a und 34b bis 234a und 234b) des bzw. jedes Paares erstreckt, wobei dieses Blechteil je nachdem, ob der Reif einstückig oder aus separaten, aneinander anliegenden Sektionen ausgebildet ist, im Wesentlichen eine Zylinder- oder Zylinderbogenform besitzt,
- eine Mehrzahl von axial nebeineinander liegenden metallischen Seilen (C1, C2, C3), die sich von zwei der Enden (634a und 634b) des bzw. jedes Paares erstrecken, wobei jedes dieser Seile je nachdem, ob der Reif einstückig oder aus separaten, aneinander anliegenden Sektionen ausgebildet ist, kreisförmig oder kreisbogenförmig ausgebildet ist.

12. Vorrichtung (30, 130) nach einem der Ansprüche 1 bis 10, **dadurch gekennzeichnet, dass** der Reif (334, 434, 534) im Wesentlichen aus einem textilen Material ausgeführt ist, das mindestens einen, bevorzugt nicht dehnbaren, Streifen oder Kord (T oder T1, T2 oder S1, S2, S3) aufweist, der sich von zwei der Enden (334a und 334b, 434a und 434b, 534a und 534b) des bzw. jeden Paares erstreckt, wobei jeder textile Streifen oder Kord je nachdem, ob der Reif einstückig oder aus separaten, aneinander anliegenden Sektionen ausgebildet ist, eine Zylinder- oder Zylinderbogenform besitzt.

13. Schlauchlose montierte Baugruppe (1) für ein Kraftfahrzeug, welche eine aus mehreren Blöcken (10a und 10b) bestehende Radfelge (10), einen Mantel (20) eines Luftreifens mit Mantelwülsten (21 und 22), die jeweils gegen ein axial inneres und äußeres Felgenhorn (12 und 13) der Felge montiert sind, und eine zwischen diesen Felgenhörnern um die Felge montierte Notlaufvorrichtung (30, 130, 230) aufweist, **dadurch gekennzeichnet, dass** die Vorrichtung der Definition in einem der vorhergehenden Ansprüche entspricht.

14. Montierte Baugruppe (1) nach Anspruch 13, **dadurch gekennzeichnet, dass** die Festklemmeinrichtungen (31 und 32) einstückig mit der Stützstruktur (30, 130, 230) ausgebildet sind und bevorzugt zwei seitliche Fortsätze (31 und 32) aufweisen, die sich beidseitig von einer radial unteren Zone der Stützstruktur axial erstrecken und die Mantelwülste (21 und 22) des Mantels (20) gegen die Felgenhörner (12 und 13) der Felge (10) festklemmen.

15. Verfahren zum Herstellen und Anbringen einer montierten Baugruppe (1) nach Anspruch 13 oder 14, **dadurch gekennzeichnet, dass** es nacheinander folgende Schritte umfasst:
a) Umspritzen des Reifs (34 bis 634) mit mindestens einem elastomeren oder thermoplastischen Material, so dass dieses Material den Reif radial und axial umgibt und dabei in der radialen Innenseite der Stützstruktur mindestens einen Hohlraum ausbildet, der an dem bzw. jedem Spalt zentriert ist, wobei die auf diese Weise erhaltene Struktur radial entlang des bzw. jedes solcherart ausgebildeten Hohlraums durchtrennt wird, so dass jede Struktur dann folgendes ausbildet:
(i) entweder einen einstückigen Ring, der an einer einzelnen Stelle (37) seines Umfangs entlang des zwischen dem Paar von Enden gegenüber von dem Reif ausgebildeten Spaltes durchtrennt ist, wobei der Reif in diesem Fall einstückig oder aus aneinander anliegenden Kreisbogenabschnitten ausgebildet ist,
(ii) oder mehrere kreisbogenförmige Ringsektoren (130A und 130B), die entlang des zwischen den Enden gegenüber von jedem Paar des Reifs ausgebildeten Spaltes aneinander anliegend angeordnet sind, wobei der Reif in diesem Fall aus diesen Sektionen ausgebildet ist, die aneinander anliegend angeordnet sind und diese Spalte bilden,
b) vorzugsweise manuelles Montieren der solcherart erhaltenen Stützstruktur (30, 130, 230) im Inneren des Mantels (20), indem die Struktur ohne die Verbindungseinrichtungen (35, 135, 235, 535, 635 und 36, 536, 636) fortlaufend in den Mantel eingesetzt wird, und zwar entweder durch Verformen der zwei Enden des geschlitzten Rings, den die Struktur im Fall (i) darstellt, oder durch aufeinanderfolgendes, aneinander anliegendes Einsetzen der Ringsektoren, welche die Struktur im Fall (ii) darstellt,
c) Montieren und Verriegeln der Verbindungseinrichtungen in dem bzw. jedem in Schritt a) gebildeten Hohlraum, so dass die Enden des bzw. jedes Paares gegenüber von dem Reif miteinander verbunden werden und im Fall (i) der durchtrennte Ring geschlossen wird bzw. im Fall (ii) die Ringsektoren aneinander anliegend festgelegt werden, daraufhin
d) Anbringen der Blöcke (10a und 10b) der Radfelge (10) unter der radial inneren Seite (30b) dieser Struktur.
